(19) Europäisches Patentamt
European Patent Office
Office européen des brevets

(11) **EP 2 708 858 A1**

(12) **EUROPEAN PATENT APPLICATION**

(43) Date of publication:
**19.03.2014 Bulletin 2014/12**

(21) Application number: **12290310.7**

(22) Date of filing: **17.09.2012**

(51) Int Cl.:
*G01F 1/36* (2006.01)　　　*G01F 1/44* (2006.01)
*G01F 1/74* (2006.01)　　　*E21B 47/06* (2012.01)
*E21B 47/10* (2012.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Services Pétroliers Schlumberger**
  **75007 Paris (FR)**
  Designated Contracting States:
  **FR**
• **Schlumberger Technology B.V. (STBV)**
  **2514 JG The Hague (NL)**
  Designated Contracting States:
  **AL BG CZ DE DK GR HU IE IT LT MK NO PL RO RS SI SK SM TR**
• **Schlumberger Holdings Limited**
  **Tortola (VG)**
  Designated Contracting States:
  **GB NL**
• **Prad Research And Development Limited**
  **British Virgin Islands (VG)**
  Designated Contracting States:
  **AT BE CH CY EE ES FI HR IS LI LU LV MC MT PT SE**

(72) Inventors:
• **Chouzounoux, Christian**
  **92210 St. Cloud France (FR)**
• **Dupoiron, Marine**
  **69340 Francheville (FR)**
• **Lionnet, Cécile**
  **78350 Les Loges en Josas (FR)**
• **Parry, Andrew**
  **92340 Bourg La Reine (FR)**

(74) Representative: **Rzaniak, Martin**
  **Etudes & Productions Schlumberger**
  **1, rue Henri Becquerel, BP 202**
  **92142 Clamart Cedex (FR)**

(54) **Method and apparatus for determining fluid parameters**

(57) Methods and apparatus to determine fluid parameters are disclosed herein. An example method includes determining a first pressure and a second pressure of a flowing mixture, which includes water and oil. The example method further includes determining a response of a capacitance sensor disposed in the mixture and determining one of a water fraction or a flow rate of the mixture based on the pressures and the response.

EP 2 708 858 A1

**Description**

**BACKGROUND**

During completion operations, equipment such as, for example, production tubing, valves, packers, and/or other equipment are employed downhole to recover hydrocarbons from a reservoir. The reservoir may be in fluid communication with several production zones along the production tubing. Generally, fluid flowing from the reservoir into the production tubing is a mixture of water and hydrocarbons.

**SUMMARY**

This summary is provided to introduce a selection of concepts that are further described below in the detailed description. This summary is not intended to identify key or essential features of the claimed subject matter, nor is it intended to be used as an aid in limiting the scope of the claimed subject matter.

An example method disclosed herein includes determining a first pressure and a second pressure of a flowing mixture, which includes water and oil. The example method further includes determining a response of a capacitance sensor disposed in the mixture and determining a water fraction or a flow rate of the mixture based on the pressures and the response.

Another example method disclosed herein includes determining one of a water fraction or a flow rate of a mixture based on a measured capacitance and measured pressures of the mixture flowing in a passageway. The example method further includes, based on the one of the water fraction or the flow rate, determining the other one of the water fraction or the flow rate.

An example apparatus disclosed herein includes a fluid passageway having a first portion and a second portion. The first portion has a first size and the second portion has a second size. The example apparatus further includes a first sensor to determine a first pressure of a mixture flowing in the first portion of fluid passageway and a second sensor to determine a second pressure of the mixture flowing in the second portion of the fluid passageway. The example apparatus also includes a third sensor disposed along the fluid passageway to measure a capacitance of the mixture. An electronic unit is communicatively coupled to the first sensor, the second sensor and the third sensor. The electronic unit is to determine a water fraction or a flow rate of the mixture based on the first pressure, the second pressure and the capacitance.

**BRIEF DESCRIPTION OF THE DRAWINGS**

Examples of methods and apparatus for determining fluid parameters are described with reference to the following figures. The same numbers are used throughout the figures to reference like features and components.

FIG. 1 illustrates an example system in which embodiments of methods and apparatus for determining fluid parameters can be implemented.

FIG. 2 illustrates various components of an example device that can implement embodiments of the methods and apparatus for determining fluid parameters.

FIG. 3 is a graph depicting responses of an example capacitance sensor.

FIG. 4 illustrates example method(s) for determining fluid parameters in accordance with one or more embodiments.

**DETAILED DESCRIPTION**

It is to be understood that the following disclosure provides many different examples for implementing different features of various embodiments. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various examples and/or configurations discussed. Moreover, the formation of a first feature over or on a second feature in the description that follows may include examples in which the first and second features are formed in direct contact, and may also include examples in which additional features may be formed interposing the first and second features such that the first and second features may not be in direct contact.

Example apparatus and methods for determining fluid parameters are disclosed herein. In some examples, fluid is flowed through a portion of a passageway (e.g., a tube). The fluid may include water and oil. A first pressure and a second pressure of the mixture flowing in the passageway may be determined via a first sensor and a second sensor, respectively. In some examples, the first sensor determines the first pressure in a first portion of the passageway having a first size, and the second sensor determines the second pressure in a second portion of the passageway having a second size smaller than the first size. Regardless, the passageway could be or partially include a tube, a valve or any kind of device or apparatus that permits the passage of fluid. In some examples, a response of a capacitance sensor disposed in the mixture is determined.

Based on the pressures and the response of the capacitance sensor, a water fraction and/or a flow rate of the mixture may be determined. In some examples, a mathematical model in which the water fraction and/or the flow rate is a function of the response and the pressure is used to determine the water fraction and/or the flow rate. In some examples, the mathematical model is based on experiments using a similar or identical passageway.

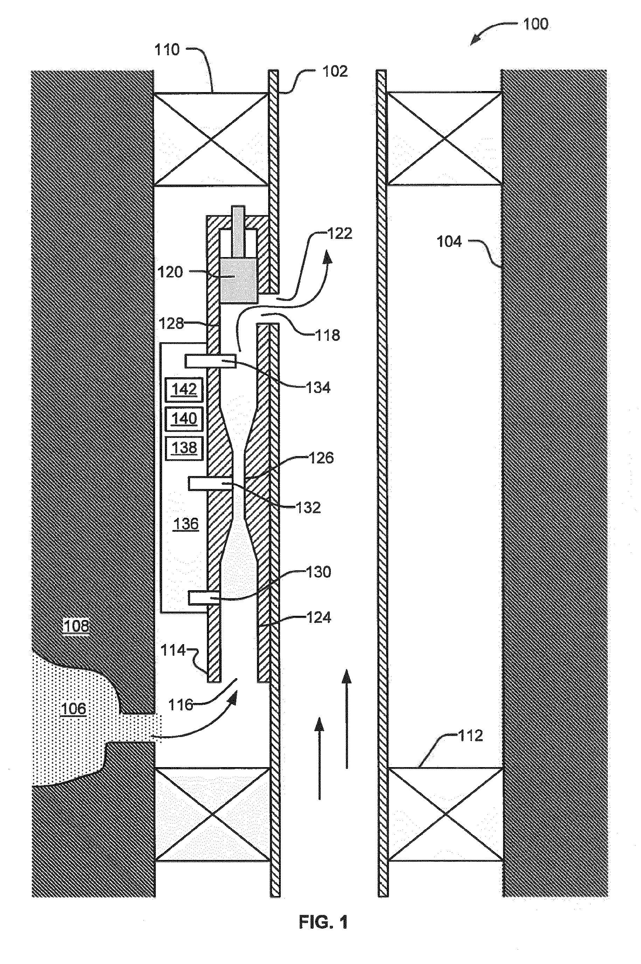

FIG. 1 illustrates an example system 100 in which the examples disclosed herein may be implemented. Other examples may be implemented using other systems such as, for example, the instrumented tubing systems described in U.S. Application Serial No. 12/911,814, filed October 26, 2010, entitled "Instrumented Tubing and Method for Determining a Contribution to Fluid Production," which is hereby incorporated herein by reference in its entirety.

The example system 100 of FIG. 1 includes production tubing 102 disposed in a wellbore 104 adjacent a production zone 106 (i.e., a fluid reservoir) of a subterranean formation 108. A first packer 110 and a second packer 112 isolate a portion of the wellbore 104 adjacent the production zone 106. In the illustrated example, instrumented tubing 114 is coupled to the production tubing 102 adjacent the production zone 106 (i.e., along the production tubing 102 between the first packer 110 and the second packer 112). The example instrumented tubing 114 includes an inlet 116, an outlet 118 and a valve 120. In the illustrated example, the instrumented tubing 114 is fluidly coupled to the production tubing 102 via the outlet 118 and a port 122 of the production tubing 102. The example valve 120 of FIG. 1 controls fluid flow into the production tubing 102 via the instrumented tubing 114. During operation, the valve 120 is actuated to a first position (e.g., an open position) to enable fluid from the production zone 106 to flow into the production tubing 102 via the instrumented tubing 114. In some examples, the fluid is a mixture including oil, water, gas, particulates, etc.

The example instrumented tubing 114 of FIG. 1 converges (e.g., conically) from an upstream portion 124 having a first diameter to a throat portion 126 having a second diameter less than the first diameter. In the illustrated example, the throat portion 126 diverges (e.g., conically) to a downstream portion 128 having the first diameter. In the illustrated example, a first pressure sensor 130 is disposed along the upstream portion 124 of the instrumented tubing 114, and a second pressure sensor 132 is disposed along the throat portion 126. Thus, the example instrumented tubing 114 includes a Venturi flowmeter. Other examples include other flowmeters, valves, or the like.

The example instrumented tubing 114 of FIG. 1 includes a capacitance sensor 134 such as, for example, a dielectric sensor (e.g., a dielectric probe). In the illustrated example, the capacitance sensor 134 is disposed along the downstream portion 128 of the instrumented tubing 114. In other examples, the capacitance sensor 134 is disposed along other portions of the instrumented tubing 114. In the illustrated example, an electronic unit 136 including a processor 138, a memory 140, etc. is communicatively coupled to the first pressure sensor 130, the second pressure sensor 132, and the capacitance sensor 134. As described in greater detail below, the electronic unit 136 acquires information via the first pressure sensor 130, the second pressure sensor 132 and the capacitance sensor 134 to determine fluid parameters such as, for example, a flow rate of the fluid and a water fraction of the fluid. In some examples, the electronic unit 136 includes a transmitter 142 to transmit information to surface equipment at or near a surface of Earth. In some examples, the electronic unit 136 is communicatively coupled to the valve 120 to control the valve 120.

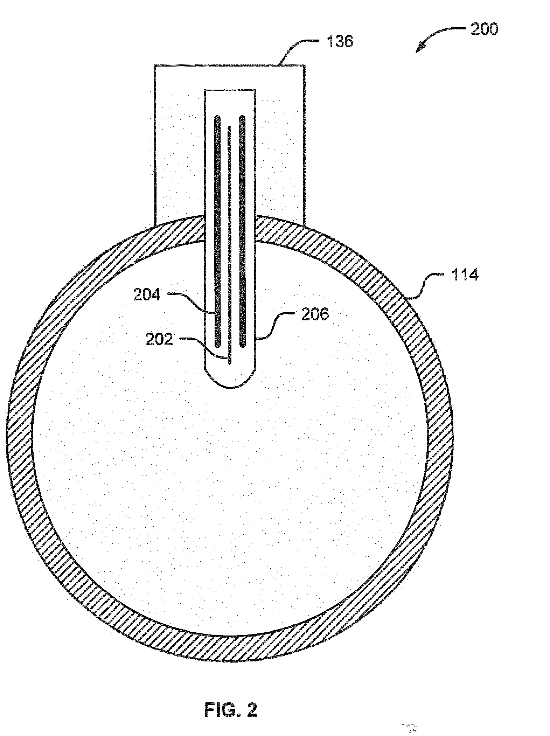

FIG. 2 illustrates an example dielectric sensor 200, which may be used to implement the example capacitance sensor 134 of FIG. 1. In the illustrated example, the dielectric sensor 200 includes a first (e.g., active) electrode 202 and a second (e.g., guard) electrode 204 enclosed in a protective cap 206 (e.g., a ceramic coating). In the illustrated example, the instrumented tubing 114 is acting as an electrical ground. Other examples employ other dielectric sensors.

The water fraction may be calculated from a capacitance measured via the dielectric sensor 200 (i.e., a measured capacitance) disposed in the fluid, which includes oil and water. The relationship between the water fraction and the measured capacitance can be expressed via the following analytical formulation:

$$\text{Equation 1:} \quad \beta = 1 - \sqrt[3]{\frac{C_{oil}}{C_f}} \, .$$

In Equation 1, $C_f$ is the measured capacitance, $C_{oil}$ is a capacitance of the oil in the fluid and $\beta$ is the water fraction of the fluid. Equation 1 is an analytical model expressing the water fraction as a function of the measured capacitance. Capacitance in pure oil is considered as a non-varying parameter. Equation 1 may be used to determine the water fraction from the measured capacitance if the capacitance of the oil is known. However, as described in greater detail below, the measured capacitance at a given water fraction may be affected by the flow rate of the fluid. For example, at a given flow rate, oil and water stratification may occur, thereby rendering Equation 1, which utilizes capacitance measurements, inaccurate. The examples disclosed herein utilize the measured capacitance and a differential pressure of the fluid flowing through the instrumented tubing 114 to accurately determine the water fraction of the fluid.

The flow rate of the fluid calculated using a Venturi tube is also as a function of the water fraction as shown in Equation 2 (Bernoulli's equation) below:

$$\text{Equation 2: } Q = \frac{\pi d^2 C_d}{4} \frac{\sqrt{2\Delta P}}{\sqrt{\rho\left(1 - \left(\frac{d}{D}\right)^4\right)}}, \text{ where } \rho = (1-\beta)\rho_{oil} + \beta\rho_{water}.$$

In Equation 2, $Q$ is the flow rate (i.e., a volumetric flow rate) of the fluid, $d$ is the second diameter of the throat portion 126, $D$ is the first diameter of the upstream portion 124 of the instrumented tubing 114, and $C_d$ is a discharge coefficient. $\Delta P$ is the differential pressure between a first pressure determined via the first pressure sensor 130 and a second pressure determined via the second pressure sensor 132. $\rho$ is a density of the fluid, $\beta$ is the water fraction, $\rho_{oil}$ is a density of the oil in the fluid and $\rho_{water}$ is a density of the water in the fluid. It is worthy to note that the differential pressure producer could also be the flow control valve or another form of differential pressure flowmeter, such as an orifice plate, nozzle, etc. or any other kind of differential pressure producer. Additionally, if the differential pressure producer is placed downstream of the water cut sensor, then under certain flow conditions, it may beneficial to mix or condition the flow upstream of the water cut probe.

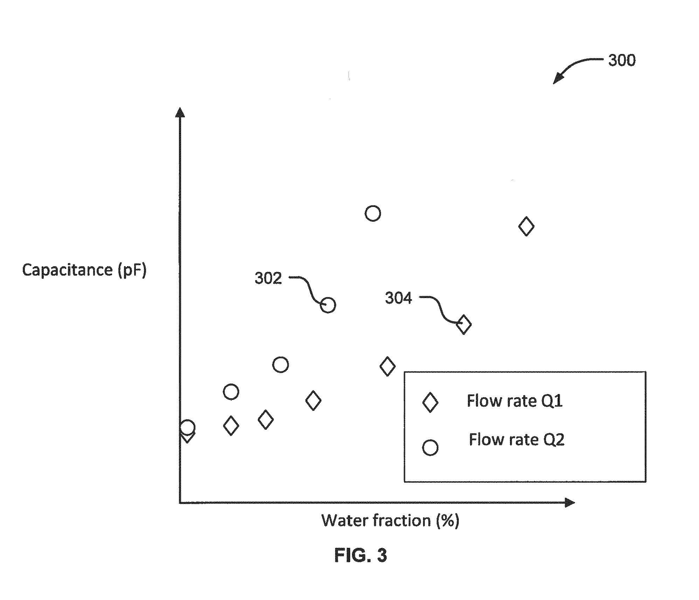

FIG. 3 is a chart 300 plotting the measured capacitance as a function of the water fraction of the fluid at a first flow rate and a second flow rate. A first plot 302 of the example chart of FIG. 3 illustrates the measured capacitance of the fluid as a function of the water fraction of the fluid at the first flow rate, Q1. A second plot 304 of the example chart of FIG. 3 illustrates the measured capacitance as a function of the water fraction of the fluid at the second flow rate, Q2.

As illustrated in the example chart 300 of FIG. 3, a relationship between the water fraction of the fluid and the measured capacitance is affected by the flow rate of the fluid. As a result, at a given water fraction, a first value of the measured capacitance when the fluid is flowing at the first flow rate is different than a second value of the measured capacitance when the fluid is flowing at the second flow rate. If the flow rate is known, another form of analytical law is used to enable computation of the water fraction based on the measured fluid capacitance and flow rate.

A mathematical model may be determined to estimate the water fraction of the fluid flowing in the instrumented tubing 114 based on the measured capacitance and a measured differential pressure (i.e., based on the response of the dielectric sensor 200 and a differential between the first pressure sensor 130 and the second pressure sensor 132, respectively) as shown in Equation 3 below:

$$\text{Equation 3: } \beta = a_0 + a_1\Delta p + a_2 C_f + a_3 C_f^{\ 2} + a_4 \Delta p C_f + a_5 C_f^{\ 3} + a_6 \Delta p C_f^{\ 2}.$$

In Equation 3, $a_0$, $a_1$, $a_2$, $a_3$, $a_4$, $a_5$, and $a_6$ are coefficients of the mathematical model, $C_f$ is the measured capacitance for the fluid mixture of the given water fraction, $\beta$, flowing at varying flow rate, inducing varying differential pressure $\Delta P$.

The coefficients of the mathematical model are determined experimentally by, for example, flowing fluid mixtures through tubing similar or identical to the example instrumented tubing 114 of FIGS. 1-2. The fluid mixtures may have a variety of water fractions, and each of the fluid mixtures may be flowed through the tubing at a variety of flow rates. Thus, the water fraction and the flow rate are factors of the experiments. During each experiment, a capacitance and a differential pressure are measured. Thus, the measured capacitance and the measured differential pressure are outputs or responses of the experiments. The experiments may be used to yield a first set (e.g., a first matrix) of measured capacitances and measured differential pressures corresponding to fluid mixtures of a variety of water fractions flowing at a variety of flow rates. The coefficients of the mathematical model may then be determined using, for example, the following expression:

$$\text{Equation 4: } [y] = [A] [x].$$

In Equation 4, [y] is a vector of the response of the experiments, [x] is a vector containing a combination of the factors, and [A] is the set of measured capacitances and measured differential pressures containing the coefficients of identical lines. In this manner, coefficients for the mathematical model associated with example instrumented tubing 114 of FIG.

1 may be determined and stored in the memory 140 of the example electronic unit 136.

Returning to FIG. 1, when the fluid is flowed from the production zone 106 into the production tubing 102 via the instrumented tubing 114 (e.g., by actuating the valve 120 to the first position), the first pressure sensor 130 determines a first pressure of the fluid, the second pressure sensor 132 determines a second pressure of the fluid, and the capacitance sensor 134 measures capacitance. Using the mathematical model and Bernoulli's equation, the example electronic unit 136 determines the water fraction and the flow rate of the fluid.

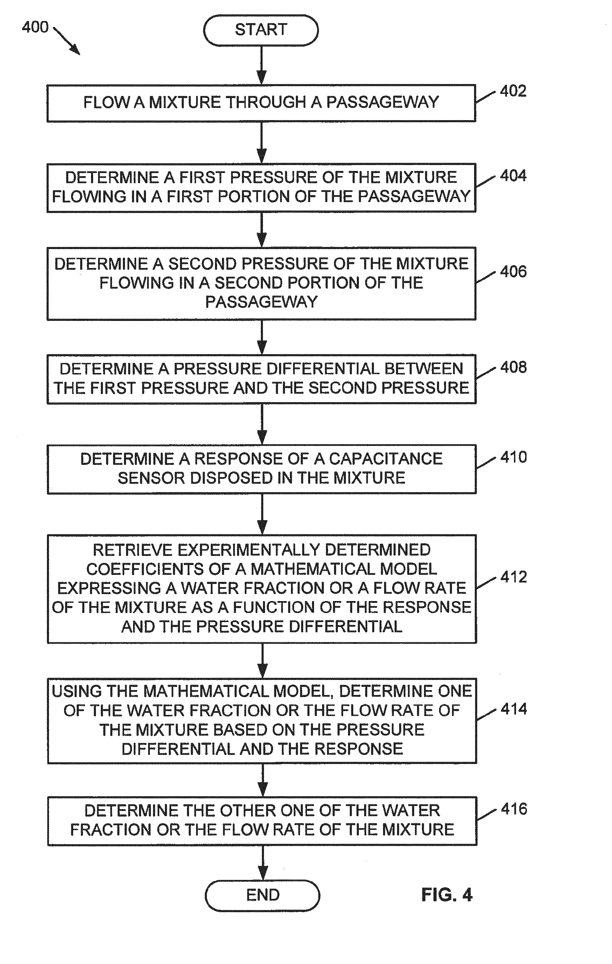

FIG. 4 is a flowchart representative of an example method 400 disclosed herein. At least some of the example method 400 of FIG. 4 may be carried out by a processor, the electronic unit 136 and/or any other suitable processing device. In some examples, at least some of the example method 400 of FIG. 4 is embodied in coded instructions stored on a tangible machine accessible or readable medium such as a flash memory, a ROM and/or random-access memory RAM associated with a processor. Some of the example method 400 of FIG. 4 may be implemented using any combination (s) of application specific integrated circuit(s) (ASIC(s)), programmable logic device(s) (PLD(s)), field programmable logic device(s) (FPLD(s)), discrete logic, hardware, firmware, etc. Also, one or more of the operations depicted in FIG. 4 may be implemented manually or as any combination of any of the foregoing techniques, for example, any combination of firmware, software, discrete logic and/or hardware.

Further, although the example method 400 is described in reference to the flowchart illustrated in FIG. 4, many other methods of implementing the example method 400 may be employed. For example, the order of execution of the blocks may be changed, and/or some of the blocks described may be changed, removed, sub-divided, or combined. Additionally, any of the example method 400 of FIG. 4 may be carried out sequentially and/or carried out in parallel by, for example, separate processing threads, processors, devices, discrete logic, circuits, etc.

FIG. 4 illustrates the example method 400 disclosed herein that may be used to determine a water fraction and/or a flow rate of a flowing mixture. The example method 400 of FIG. 4 begins by flowing a mixture (e.g., from the production zone 106 of the subterranean formation 108 of FIG. 1) through a passageway (e.g., the example instrumented tubing 114 of FIG. 1) (block 402). In some examples, the mixture includes oil and water. In some examples, the mixture is flowed through the passageway by actuating a valve (e.g., the example valve 120 of FIG. 1). In some examples, the passageway includes a first portion having a first size (e.g., the upstream portion 124 of the example instrumented tubing 114 of FIG. 1.) and a second portion having a second size (e.g., the throat portion 126 of the example instrumented tubing 114 of FIG. 1). In some examples, the first portion and the second portion of the passageway define a Venturi tube.

At block 404, a first pressure of the mixture flowing in the first portion of the passageway is determined (e.g., via the first pressure sensor 130). At block 406, a second pressure of the mixture flowing in the second portion of the passageway is determined (e.g., via the second pressure sensor 132). At block 408, a pressure differential between the first pressure and the second pressure is determined. At block 410, a response of a capacitance sensor (e.g., the example dielectric sensor 200 of FIG. 2) disposed in the mixture is determined. The response of the capacitance sensor is affected by a water fraction of the mixture and a flow rate of the mixture.

At block 412, experimentally determined coefficients of a mathematical model expressing the water fraction or the flow rate of the mixture as a function of the response and the pressure differential are retrieved (e.g., from the memory 140 via the electronic unit 136). Based on the pressure differential and the response of the capacitance sensor, the flow rate or the water fraction of the mixture is determined using the mathematical model (block 414). Thus, in the illustrated example, the water fraction or the flow rate of the mixture is determined based on an estimated relationship (e.g., the mathematical model expressed in Equation 3 above and/or any other suitable mathematical model(s)) between the response of the capacitance sensor, the water fraction and the flow rate. In some examples, the coefficients of the mathematical model are determined based on experimentally determined capacitance values and pressure values of a fluid flowing through a similar or identical passageway. Because calculations (e.g., via Equation 2) of the water fraction and the flow rate are interdependent, the other one of the water fraction or the flow rate may be determined once the one of the water fraction or the flow rate is determined. Thus, at block 416, the other one of the water fraction or the flow rate of the mixture is determined.

Although only a few example embodiments have been described in detail above, those skilled in the art will readily appreciate that many modifications are possible in the example embodiments without materially departing from this disclosure. Accordingly, such modifications are intended to be included within the scope of this disclosure as defmed in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

The Abstract at the end of this disclosure is submitted with the understanding that it will not be used to interpret or limit the scope or meaning of the claims.

**Claims**

1. A method, comprising:

   determining a first pressure and a second pressure of a flowing mixture, the mixture including water and oil;
   determining a response of a capacitance sensor disposed in the mixture; and
   determining one of a water fraction or a flow rate of the mixture based on the pressures and the response.

2. The method of claim 1 further comprising determining the other one of the flow rate or the water fraction.

3. The method of claim 1 wherein determining the first pressure and the second pressure comprises:

   determining the first pressure of the mixture where the mixture is flowing in a first portion of a passageway having a first size; and
   determining the second pressure of the mixture where the mixture is flowing in a second portion of the passageway having a second size, the second size less than the first size.

4. The method of claim 1 wherein determining the response comprises determining a capacitance via a dielectric sensor.

5. The method of claim 1 wherein determining the water fraction or the flow rate of the mixture comprises determining the water fraction or the flow rate using a mathematical model based on experimentally determined capacitance values and pressure values.

6. The method of claim 1 wherein determining the one of the water fraction or the flow rate comprises determining the one of the water fraction or the flow rate based on an estimated relationship between the response, the water fraction and the flow rate.

7. The method of claim 1 further comprising flowing the mixture from a subterranean formation through a portion of a passageway.

8. An apparatus, comprising:

   a fluid passageway having a first portion and a second portion, the first portion having a first size and the second portion having a second size;
   a first sensor to determine a first pressure of a mixture flowing in the first portion of fluid passageway;
   a second sensor to determine a second pressure of the mixture flowing in the second portion of the fluid passageway;
   a third sensor disposed along the fluid passageway to measure a capacitance of the mixture; and
   an electronic unit communicatively coupled to the first sensor, the second sensor and the third sensor, the electronic unit to determine a water fraction or a flow rate of the mixture based on the first pressure, the second pressure and the capacitance.

9. The apparatus of claim 8 further comprising first tubing defining the fluid passageway, the first tubing to be fluidly coupled to second tubing.

10. The apparatus of claim 9 wherein the second tubing comprises production tubing.

FIG. 1

**FIG. 2**

FIG. 3

400

START

FLOW A MIXTURE THROUGH A PASSAGEWAY — 402

DETERMINE A FIRST PRESSURE OF THE MIXTURE FLOWING IN A FIRST PORTION OF THE PASSAGEWAY — 404

DETERMINE A SECOND PRESSURE OF THE MIXTURE FLOWING IN A SECOND PORTION OF THE PASSAGEWAY — 406

DETERMINE A PRESSURE DIFFERENTIAL BETWEEN THE FIRST PRESSURE AND THE SECOND PRESSURE — 408

DETERMINE A RESPONSE OF A CAPACITANCE SENSOR DISPOSED IN THE MIXTURE — 410

RETRIEVE EXPERIMENTALLY DETERMINED COEFFICIENTS OF A MATHEMATICAL MODEL EXPRESSING A WATER FRACTION OR A FLOW RATE OF THE MIXTURE AS A FUNCTION OF THE RESPONSE AND THE PRESSURE DIFFERENTIAL — 412

USING THE MATHEMATICAL MODEL, DETERMINE ONE OF THE WATER FRACTION OR THE FLOW RATE OF THE MIXTURE BASED ON THE PRESSURE DIFFERENTIAL AND THE RESPONSE — 414

DETERMINE THE OTHER ONE OF THE WATER FRACTION OR THE FLOW RATE OF THE MIXTURE — 416

END

FIG. 4

**EP 2 708 858 A1**

Europäisches Patentamt
European Patent Office
Office européen des brevets

# EUROPEAN SEARCH REPORT

Application Number

EP 12 29 0310

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 266 597 A (PECO PRODUCTION TECHNOLOGY LIM [GB]) 3 November 1993 (1993-11-03) <br> * page 2, last paragraph - page 5, line 14; claims 1-3,5-12; figure 1 * <br> * page 6, line 1 - page 9, line 25 * <br> ----- | 1-10 | INV. <br> G01F1/36 <br> G01F1/44 <br> G01F1/74 <br> E21B47/06 <br> E21B47/10 |
| X | WO 2011/067606 A2 (FLODYNAMIC LTD [GB]; SIMONIAN SAM [FR] S2PHASE LTD; SIMONIAN SAM [FR]) 9 June 2011 (2011-06-09) <br> * page 9, line 12 - page 12, line 28; figures 1-3 * <br> ----- | 1-10 | |
| X | WO 2006/083170 A1 (ROXAR AS [NO]; NYFORS EBBE GUSTAF [NO]) 10 August 2006 (2006-08-10) <br> * page 6, line 29 - page 10, line 14; claims 1-3; figures 1-5 * <br> * page 4, line 4 - line 29 * <br> ----- | 1-10 | |
| X | GB 2 351 810 A (SCHLUMBERGER LTD [AN]) 10 January 2001 (2001-01-10) <br> * page 2, line 3 - line 22; claims 1-6,27,33,34,42,43,44,53 * <br> * page 3, line 14 - page 6, line 7 * <br> ----- | 1-10 | TECHNICAL FIELDS SEARCHED (IPC) <br><br> G01F |
| A | US 2011/100642 A1 (CENS FABIEN [FR] ET AL) 5 May 2011 (2011-05-05) <br> * figures 2-5 * <br> ----- | 1-10 | |

The present search report has been drawn up for all claims

| Place of search | Date of completion of the search | Examiner |
|---|---|---|
| The Hague | 12 April 2013 | Rambaud, Dilek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11

## ANNEX TO THE EUROPEAN SEARCH REPORT
## ON EUROPEAN PATENT APPLICATION NO.

EP 12 29 0310

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2013

| Patent document cited in search report | | Publication date | Patent family member(s) | | Publication date |
|---|---|---|---|---|---|
| GB 2266597 | A | 03-11-1993 | GB | 2266597 A | 03-11-1993 |
| | | | WO | 9322628 A1 | 11-11-1993 |
| WO 2011067606 | A2 | 09-06-2011 | CA | 2779807 A1 | 09-06-2011 |
| | | | EP | 2507476 A2 | 10-10-2012 |
| | | | US | 2012279292 A1 | 08-11-2012 |
| | | | WO | 2011067606 A2 | 09-06-2011 |
| WO 2006083170 | A1 | 10-08-2006 | GB | 2437021 A | 10-10-2007 |
| | | | NO | 321930 B1 | 24-07-2006 |
| | | | US | 2008148867 A1 | 26-06-2008 |
| | | | WO | 2006083170 A1 | 10-08-2006 |
| GB 2351810 | A | 10-01-2001 | NONE | | |
| US 2011100642 | A1 | 05-05-2011 | EP | 2317073 A1 | 04-05-2011 |
| | | | US | 2011100642 A1 | 05-05-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 91181410 A